# EUROPÄISCHE PATENTANMELDUNG

(11) **EP 1 516 689 A1**
(43) Veröffentlichungstag der Anmeldung: **23.03.2005**
(21) Anmeldenummer: 03405683.8
(22) Anmeldetag: 19.09.2003
(51) Int. Cl.: B23K 20/10, B06B 3/00, B29C 65/08, H01R 43/02

(54) **Ultraschallschweissvorrichtung und Verfahren zum Ultraschallverbinden von Gegenständen wie elektrischen Leitern, insbesondere von Litzen**

(71) Anmelder: Telsonic Holding AG, 9552 Bronschhofen (CH)
(72) Erfinder: Kammerer, Michael, 9535 Wilen bei Wil (CH); Büttiker, Albert, 9533 Kirchberg (CH)
(74) Vertreter: Müller, Christoph Emanuel

(57) **Zusammenfassung**

Eine Ultrschallvorrichtung (1) weist eine Sonotrode (2) mit einer Sonotrodenspitze (22) mit einer Arbeitsfläche (21), einen Seitenschieber (5) und einen Amboss (3) mit einem Oberteil (32) und einem Unterteil (31) auf, welche einen Verdichtungsraum definieren. Die Sonotrode (2) liegt mit einer Kontaktfläche (24) flach auf einer Auflagefläche (10) auf. Pneumatische Antriebe sind zum Bewegen des Ambosses (3) und einer Schutzhaube (7) vorgesehen. Zum vertikalen Bewegen des Ambosses ist eine Führungskulisse (36) mit im Winkel zueinander stehenden Führungsabschnitten vorgesehen. Zum Bewegen von Schutzhaube (7) und dem Oberteil (32) des Amboss (3) sind diese mit Seilzügen (33,73) mit Antrieben verbunden.

## Beschreibung

Die Erfindung betrifft eine Ultraschallschweissvorrichtung und ein Verfahren zum Ultraschallverbinden von Gegenständen wie elektrischen Leitern, insbesondere von Litzen, mit den Merkmalen des Oberbegriffs der unabhängigen Patentansprüche.

Insbesondere zum Verbinden von Litzen, wie sie beispielsweise im Fahrzeugbau eingesetzt werden ist es bekannt, die Litzen in einen durch eine Ultraschallsonotrode, einen Amboss und einen Seitenschieber gebildeten Verdichtungsraum einzulegen. Durch Bewegen von Sonotrode und Amboss wird der Verdichtungsraum verkleinert. Dabei werden die Litzen gegeneinander gedrückt und durch Beaufschlagung mit Ultraschall miteinander verschweisst.

Aus EP 286 975 ist beispielsweise eine solche Schweissvorrichtung bekannt. Ein Amboss wird bezogen auf eine Sonotrode zur Verdichtung des Ultraschallraums linear verschoben. Aus US 4 782 990 ist eine Ultraschallschweisszange bekannt, bei der der Verdichtungsraum durch Verschwenken eines Ambossteils verringert werden kann.

US 6 299 052 zeigt eine Ultraschallschweissvorrichtung, bei welcher die Grösse des Verdichtungsraums vor und beim Einlegen von zu verschweissenden Gegenständen mit einem Controller überwacht wird. US 5 772 100 zeigt eine Schweisszange, bei der eine Sonotrode über eine federnde Lagerung schwingungsentkoppelt befestigt ist. US 607 077 zeigt eine ähnliche Schweisszangenanordnung, bei der die Höhe und die Breite eines Verdichtungsraumes in einer definierten Art und Weise veränderbar ist. US 5 921 457 zeigt eine spezifische Ambossform für eine Ultraschallschweisszange. DE 35 08 122 zeigt eine Ultraschallschweissvorrichtung bei der eine Sonotrode in einem Schallknotenpunkt mittels Stiftschrauben in einem Sonotrodenhalter eingespannt wird. Dadurch lässt sich der Sonotrodenkopf in einer bezüglich eines Amboss justierten Lage befestigen.

DE 37 10 603 zeigt eine pistolenartig ausgebildete Ultraschallschweisszange. DE 37 45 065 zeigt ein Verfahren zum Ultraschallverbinden von elektrischen Leitern, bei dem die Verdichtung eines Verdichtungsraums durch gemeinsames horizontales Verschieben von zwei Ambossflächen bei Fortsetzung einer gemeinsamen Vertikalverschiebung durchgeführt wird.

Aus EP 723 713 ist ein Verfahren und eine Vorrichtung zum Kompaktieren und anschliessendem Schweissen von elektrischen Leitern bekannt, bei dem durch Zwangskopplung von Teilen einer Gegenelektrode der Sonotrode ein fest vorgegebenes Höhen zu Breiten Verhältnis des Verdichtungsraums erzielt werden kann. Aus DE 37 19 083 ist ebenfalls ein Verfahren zum Verbinden elektrischer Leiter mittels Ultraschall bekannt, bei dem ein Verdichtungsraum durch gemeinsames vertikales und horizontales Verschieben verringert wird. Aus DE 19 540 860 ist eine Ultraschallschweissvorrichtung bekannt. Danach werden zwei den Verdichtungsraums umfangsseitig teilweise umschliessende Gegenelektrodenteile zumindest zeitweise zwangsgekoppelt verstellt. Aus DE 44 29 684 ist ein Verfahren zum Kompaktieren und anschliessenden Verschweissen von Litzen mittels Ultraschall bekannt, bei dem nach der Kompaktierung der Leiter ein Wert gemessen wird, der die Grösse der Kompaktierung bestimmt. Bei einem Wert, der ausserhalb eines Grenzbereichs liegt, wird keine Schweissung durchgeführt. Aus WO 02/43915 ist ausserdem eine Vorrichtung zum Verbinden von Gegenständen sowie Werkzeuge bekannt, bei denen ein Arbeitsteil mit einer Arbeitsfläche durch Löten, Kleben, Schweissen oder Schrumpfen mit einem Tragteil verbunden ist.

Die bekannten Vorrichtungen und Verfahren weisen alle bestimmte Nachteile auf. Insbesondere ist es mit bekannten Vorrichtungen schwierig, die Sonotrode genau ausgerichtet zu positionieren. Vor dem Betrieb von bekannten Vorrichtungen ist eine Justierung der Sonotrode notwendig, sodass die Arbeitsfläche der Sonotrodenspitze genau in einer gewünschten Ebene liegt. Ein weiteres Problem bei den bekannten Verfahren und Vorrichtung besteht darin, dass die Vorrichtungen verhältnismässig grosse Dimensionen aufweisen. Sie eignen sich daher schlecht als Handgeräte.

Ein weiterer Nachteil der bekannten Vorrichtungen besteht darin, dass aufgrund der Reibung zwischen einzelnen zu verschiebenden Teilen Abrieb entsteht und grosse Kräfte aufgewendet werden müssen. Ausserdem besteht bei bekannten Vorrichtungen das Problem, dass insbesondere beim Verschweissen von Litzen einzelne Drähte der Litzen in Spalten zwischen den zu verschiebenden Teilen eingeklemmt werden können. Ein weiterer Nachteil von bekannten Vorrichtungen besteht darin, dass die Taktzeiten verhältnismässig lang sind. Verhältnismässig viel Zeit geht beim Beginn des Verdichtungsvorgangs verloren, wenn die Dimension des Verdichtungsraums reduziert wird aber der Amboss noch nicht in Kontakt mit den zu verbindenden Gegenständen liegt. Ein allgemeines Problem bei solchen Vorrichtungen besteht ausserdem in der Überwachung und Kontrolle der verschiedenen Parameter, namentlich der Position der den Verdichtungsraum begrenzenden Teile und die auf die zu verbindenden Gegenstände ausgeübte Kraft. Ein weiteres Problem besteht darin, dass es häufig nachträglich nicht mehr nachvollziehbar ist, welche Positionen und andere Schweissparameter zu welchen Schweissresultaten geführt hat.

Es ist deshalb eine Aufgabe der vorliegenden Erfindung, die Nachteile des Bekannten zu vermeiden und eine Ultraschallschweissvorrichtung und ein Verfahren zum Ultraschallverbinden von Gegenständen zu schaffen, welche bei möglichst geringem konstruktivem Aufwand optimale Schweissresultate liefern. Insbesondere ist es Aufgabe der Erfindung, eine Vorrichtung zu schaffen, welcher ohne grossen Justieraufwand eine präzise Positionierung der Sonotrode im Bezug auf andere, den Verdichtungsraum begrenzende Elemente erzielt werden kann. Eine weitere Aufgabe der Erfindung besteht darin, eine Vorrichtung zu schaffen, bei der die Dimension im Vergleich zu herkömmlichen Vorrichtungen reduzierbar ist, sodass die Vorrichtung als Handgerät einsetzbar ist. Eine weitere Aufgabe der Erfindung besteht darin, die Reibung zwischen den zu verschiebenden Teilen und Auflageflächen zu reduzieren. Ausserdem soll gemäss der vorliegenden Erfindung die Gefahr des Einklemmens von Drähten von Litzen beim Komprimierund/oder beim Öffnungsvorgang des Verdichtungsraums reduziert werden. Eine weitere Aufgabe der Erfindung besteht darin, die Taktzeiten zu verbessern. Noch eine weitere Aufgabe der Erfindung besteht darin, eine Vorrichtung zu schaffen, mittels welcher die Positionen und/oder die auf die zu verschweissenden Gegenstände ausgeübte Kraft präzise, rasch und einfach ermittelt werden können. Ausserdem besteht eine weitere Aufgabe der Erfindung darin, eine Vorrichtung und ein Verfahren zu schaffen, mittels welchen eine Qualitätskontrolle der hergestellten Schweissverbindungen auf einfache Weise zuverlässig möglich ist.

Erfindungsgemäss werden diese Aufgaben mit einer Vorrichtung und mit einem Verfahren mit den Merkmalen des kennzeichnenden Teils der unabhängigen Patentansprüche gelöst.

Die erfindungsgemässe Ultraschallschweissvorrichtung dient zum Verbinden von Gegenständen, typischerweise von elektrischen Leitern. Insbesondere ist die Vorrichtung zum Verbinden von Litzen geeignet. Ein denkbares Anwendungsgebiet ist beispielsweise das Verschweissen von Kabelbäumen für den Automobilbau. Die Ultraschallschweissvorrichtung weist einen Verdichtungsraum zur Aufnahme der zu verschweissenden Gegenstände auf. Der Verdichtungsraum ist auf wenigstens einer Seite durch eine Arbeitsfläche einer Sonotrodenspitze einer Sonotrode begrenzt. Der Verdichtungsraum ist ausserdem typischerweise durch einen Seitenschieber und einen Amboss in an sich bekannter Art und Weise begrenzt. Die Sonotrode ist mit einer Frequenz derart in Resonanz betreibbar, dass sie wenigstens einen longitudinalen Schwingungsnullpunkt aufweist. Gemäss den Merkmalen eines ersten Aspekts der vorliegenden Erfindung ist die Sonotrode im Bereich des Schwingungsnullpunktes mit einer flachen Kontaktfläche versehen. Die flache Kontaktfläche liegt flächig auf einer flachen Auflagefläche der Ultraschallschweissvorrichtung auf. Durch Anpressen der Sonotrode mit ihrer Kontaktfläche gegen die Auflagefläche ergibt sich eine genaue Positionierung der Längsachse der Sonotrode in einer vorbestimmten Ebene. Durch präzises Bearbeiten der Kontaktfläche und der Auflagefläche ist es möglich, die Sonotrode in einer genau definierten Lage zu befestigen, ohne dass ein nachträgliches Justieren notwendig ist.

Gemäss einer bevorzugten Ausführungsform dieses Aspekts der Erfindung weist die Arbeitsfläche der Sonotrode bezogen auf die Kontaktfläche eine genau vorbestimmte Lage auf. Insbesondere verläuft die Arbeitsfläche der Sonotrode parallel zu der Kontaktfläche. Selbstverständlich ist hier eine Parallelität innerhalb von gewissen Toleranzen zulässig. Typischerweise wären Abweichungen der Sonotrodenspitze von 0,02 mm, bevorzugt 0,01 mm bezogen auf eine genaue Parallelität denkbar.

Die Vorrichtung kann ausserdem mit Stellmitteln versehen sein, mittels welchen die Sonotorde in einer Richtung parallel zur Auflagefläche verstellbar ist. Durch die flächige Auflage zwischen Kontaktfläche und Auflagefläche ist die Ebene der Längsachse der Sonotrode genau definiert. Die Richtung der Längsachse ist dadurch jedoch nicht genau definiert. Sie lässt sich mit Hilfe dieser Stellmittel präzise einstellen.

Gemäss einem weiteren Aspekt der Erfindung ist es denkbar, dass die Sonotrode eine separate Sonotrodenspitze aufweist, welche mit Führungsmitteln versehen ist. Mit Hilfe der Führungsmittel lässt sich die Sonotrodenspitze in einer genau vordefinierten Winkelstellung an der Sonotrode befestigen. Auch wenn diese Lösung mit beliebig gelagerten Sonotroden vorteilhaft eingesetzt werden kann, ist eine Kombination einer derartigen Befestigung der Sonotrodenspitze mit der vorstehend beschriebenen Befestigung der Sonotrode besonders vorteilhaft. Damit lässt sich eine besonders genaue Positionierung der Arbeitsfläche der Sonotrodenspitze erzielen.

Gemäss noch einem weiteren Aspekt der Erfindung weist die Schweissvorrichtung einen Verdichtungsraum auf, der durch eine Arbeitsfläche einer Sonotrodenspitze, durch einen Amboss mit einem vertikal verschiebbaren Seitenteil und einem horizontal verschiebbaren Oberteil sowie durch einen Seitenschieber begrenzt ist. Gemäss diesem Aspekt der Erfindung ist der Oberteil und/oder eine den Verdichtungsraum abdeckende Schutzhaube mit einem Seilzug mit je einer Antriebsvorrichtung verbunden. Typischerweise kann die Antriebsvorrichtung eine pneumatische Antriebsvorrichtung sein. Die Verwendung eines Seilzuges erlaubt es, die Antriebsanordnung, also typischerweise einen Pneumatikzylinder an einer beliebigen Stellen innerhalb oder ausserhalb des Gehäuses der Schweissvorrichtung anzuordnen. Das Gehäuse kann daher besonders platzsparend konstruiert werden, da die Antriebsvorrichtungen an eine Stelle gebracht werden können, wo ausreichend Platz zur Verfügung steht. Während dieser Aspekt der Erfindung für sich alleine bereits besondere Vorteile aufweist ist selbstverständlich eine Kombination eines derartigen Antriebs mit der vorstehend beschriebenen Lagerung der Sonotrode besonders vorteilhaft.

Gemäss noch einem weiteren Aspekt der Erfindung ist der Verdichtungsraum wenigstens an einer Begrenzungsseite, typischerweise am Seitenteil des Ambossteils mit einer Schutzplatte versehen. Die Schutzplatte kann insbesondere eine Hartmetallplatte, beispielsweise aus CPM10V Zapp, Oberflächen gehärtet HRC 61 +/- 1. sein. Dadurch werden die Standzeiten der erfindungsgemässen Schweissvorrichtung erhöht. Auch dieser Aspekt der Erfindung ist für sich alleine vorteilhaft, führt aber in Kombination mit den oben stehenden Konstruktionen zu einer besonders vorteilhaften Ausführung der erfindungsgemässen Schweissvorrichtung.

Gemäss einem weiteren Aspekt der Erfindung wird der Verdichtungsraum durch einen Seitenschieber begrenzt. Der Seitenschieber ist etwa rechtwinklig zu einer den Verdichtungsraum begrenzenden Begrenzungsfläche verschiebbar. Die gegen die Arbeitsfläche der Sonotrode gerichtete Seite des Seitenschiebers ist derart abgeschrägt, dass zwischen der Arbeitsfläche und dem Seitenschieber ein Spalt gebildet wird, der sich von der Begrenzungsfläche her erweitert. Mit dieser Anordnung ist einerseits die Verschiebbarkeit des Seitenschiebers verbessert. Die Reibung ist reduziert. Ausserdem ist auch das Problem des Verklemmens von Drähten der zu verschweissenden Litzen reduziert. Auch diese Ausführungsform ist für sich allein vorteilhaft, lässt sich aber auch in Kombination mit den übrigen vorstehend beschriebenen Ausführungsformen gemäss den übrigen Aspekten der Erfindung kombinieren.

Gemäss noch einem weiteren Aspekt der Erfindung ist der Verdichtungsraum teilweise durch einen gegen eine Sonotrodenspitze bewegbaren Amboss begrenzt. Der Amboss ist über ein Getriebe mit einem Antrieb verbunden. Das Getriebe weist innerhalb eines Hubs des Ambosses unterschiedliche Übersetzungen auf. Insbesondere weist der Amboss ein Führungsmittel auf, das in einer Führungskulisse gelagert ist. Die Führungskulisse dient zur Bewegung des Ambosses zum Zweck der Reduktion der Grösse des Verdichtungsraums. Gemäss diesem Aspekt der Erfindung weist die Führungskulisse wenigstens zwei im Winkel zueinander stehende Führungsabschnitte auf. Es ist auch ein gekrümmter Führungsabschnitt denkbar. Die unterschiedlich angeordneten Führungsabschnitte führen zu unterschiedlichen Übersetzungen. Mit gleichbleibender Antriebsgeschwindigkeit kann daher der Amboss in unterschiedlichen Positionen mit unterschiedlichen Geschwindigkeiten verfahren werden. Insbesondere ist es denkbar, dass die Führungskulisse so ausgebildet ist, dass bei gleichbleibender Geschwindigkeit der Antriebseinrichtung die Geschwindigkeit am Anfang einer Verdichtungsphase grösser ist als am Ende der Verdichtungsphase. Dies ermöglicht es, zum Beginn der Verdichtung den Verdichtungsraum rasch zu verkleinern, wenn noch kein Kontakt mit den eingelegten Litzen besteht. Dadurch können die Taktzeiten erhöht werden. Auch diese Ausführungsform führt für sich allein bereits zu besonderen Vorteilen, lässt sich aber auch bevorzugt mit den übrigen, vorstehend beschriebenen Ausführungsformen kombinieren.

Gemäss einem weiteren Aspekt der Erfindung ist eine Ultraschallvorrichtung vorgeschlagen, bei der wenigstens eine pneumatische Antriebsvorrichtung mit einem Pneumatikzylinder zur Bewegung des Ambosses vorgesehen ist. Gemäss diesem Aspekt der Erfindung sind im Pneumatikzylinder Druckmessmittel angeordnet. Mittels diesen Druckmessmitteln ist der Druck im Zylinder und damit die mit dem Zylinder auf die Gegenstände, z.B. die Litze ausgeübte Kraft messbar. Dies ermöglicht eine einfache Überwachung des Schweissvorgangs und die Erfassung von entsprechenden Kraftwerten. Auch dieser Aspekt der Erfindung ist für sich allein vorteilhaft, lässt sich aber auch mit den übrigen beschriebenen Ausführungsformen kombinieren.

Ein weiterer Aspekt der Erfindung besteht ausserdem darin, dass bei einer Ultraschallschweissvorrichtung, bei der wenigstens ein bewegbares Teil wie ein Seitenschieber, ein Amboss oder eine Schutzhaube mittels pneumatischen Antrieben betätigt wird, die Pneumatikzylinder mit einer Druckleitung mit einem Druckerzeuger verbunden sind. Erfindungsgemäss ist die Druckleitung derart lang gewählt, dass der Druckerzeuger ausserhalb eines Gehäuses der Schweissanordnung angeordnet werden kann. Dies erlaubt es, die Schweisszange besonders mit geringem Gewicht auszubilden, sodass sie flexibel an verschiedenen Orten platziert werden kann. In diesem Zusammenhang ist es besonders vorteilhaft, mehrere allenfalls vorhandene Druckluftleitungen miteinander zu einem Strang zusammenzufassen. Ausserdem ist es vorteilhaft, die Druckluftleitungen flexibel auszugestalten, sodass sich die Ultraschallschweissvorrichtung einfach bewegen lässt. Auch diese Ausführungsform ist für sich alleine einsetzbar und in Kombination mit den vorstehend beschriebenen Lösungen denkbar.

Gemäss einem erfindungsgemässen Verfahren zum Ultraschallverschwinden von Gegenständen wie beispielsweise elektrischen Leitern, insbesondere von Litzen werden die Gegenstände zuerst in einen Verdichtungsraum eingelegt, der durch eine Arbeitsfläche einer Sonotrode, einen Amboss mit einem Oberteil und einem Seitenteil sowie durch einen Seitenschieber begrenzt bzw. begrenzbar ist. Nach dem Einlegen der Gegenstände wird der Verdichtungsraum geschlossen und die eingelegten Gegenstände werden durch Bewegen eines der den Verdichtungsraum begrenzenden Elemente, insbesondere durch Bewegen einer Ambossfläche eines Amboss in Richtung der Arbeitsfläche der Sonotrode verdichtet. Gleichzeitig oder anschliessend werden die eingelegten Gegenstände mit Ultraschall beaufschlagt. Dadurch werden sie miteinander verschweisst. Nach Beendigung der Verschweissung wird der Verdichtungsraum zur Entnahme der verschweissten Gegenstände wieder geöffnet. Der Öffnungsvorgang erfolgt dadurch, dass zuerst der Seitenschieber vorzugsweise nur leicht geöffnet wird. Anschliessend wird der Amboss hochgefahren. Dabei wird gleichzeitig das Oberteil des Ambosses gegen den Seitenschieber bewegt. Typischerweise wird das Oberteil des Ambosses mit einer Feder automatisch gegen den Seitenschieber gedrückt, sobald der Amboss sich nach oben bewegt. Bevor die Aufwärtsbewegung des Ambosses beginnt, bewegt sich das Oberteil noch nicht, da es mit einer Kraft beaufschlagt und dadurch gegen die verschweissten Litzen gedrückt ist. Beim Hochfahren des Ambossteils wird das Oberteil automatisch durch die Federkraft gegen den durch den Seitenschieber gebildeten Gegenanschlag gedrückt. Ein Vorteil dieses Verfahrens besteht darin, dass allfällig im Verdichtungsraum liegende, einzelne Drähte beim Zurückfahren des Oberteils des Ambosses nicht eingeklemmt werden. Statt dessen werden sie in Richtung des Verdichtungsraums gedrückt und können von da entfernt werden. Das Risiko einer Verklemmung besteht daher nicht.

Besonders bevorzugt wird der Seitenschieber nur ganz leicht geöffnet. Typischerweise erfolgt eine Bewegung von 250 - 400 µm. Anschliessend wird der Amboss hochgefahren. Der Seitenschieber wird danach weiter geöffnet. Das Oberteil des Amboss liegt dabei am Seitenschieber an. Das Oberteil wird erst zurück bewegt, wenn der Amboss sich in der hochgefahrenen Position befindet.

Gemäss einem weiteren Aspekt der Erfindung wird bei einer wie vorstehend beschriebenen Ultaschallschweissanordnung die auf die im Verdichtungsraum liegenden Gegenstände ausgeübte Kraft durch Messung des Drucks in einem Pneumatikzylinder bestimmt. Der Pneumatikzylinder dient zum Bewegen des Ambossteils.

Gemäss noch einem weiteren Aspekt der Erfindung werden die Positionen der beweglichen Teile, also typischerweise des Oberteils und des Seitenteils des Ambosses sowie des Seitenschiebers laufend gemessen und gespeichert. Gleichzeitig wird ebenfalls der Betrag der auf die Gegenstände ausgeübten Kraft beispielsweise mittels eines Drucksensors in einem Pneumatikzylinder gemessen. Die derart ermittelten Werte werden abgespeichert. Dadurch ist es jederzeit möglich, im Hinblick auf eine Qualitätskontrolle die Schweissparameter zu prüfen. Insbesondere können damit auch Statistiken zur Qualitätskontrolle erstellt werden. Besonders bevorzugt werden die Positionen der beweglichen Elemente mit einem digitalen Messgeber, beispielsweise einem magnetischen Sensor gemessen. Typischerweise kann die Position des Seitenschiebers mit einem digitalen Inkrementalgeber gemessen werden. Die Position des Amboss in vertikaler Richtung wird typischerweise über einen magnetischen Linearmessgeber bestimmt. Bevorzugt wird der Messgeber nicht am Amboss selbst sondern im Bereich der Führungskulisse zur Betätigung des Amboss angebracht. Aufgrund der Übersetzung, welche mit der Führungskulisse erzielt wird, ist die Genauigkeit, mit der die Ambossposition bestimmt werden kann in diesem Ausführungsbeispiel viel grösser. Dadurch können auch magnetische Linearmessgeber verwendet werden, deren Präzision an sich zur direkten Ermittlung der Ambossposition nicht ausreichend wären.

Gemäss einem weiteren Aspekt der Erfindung erfolgt in einem ersten Verdichtungsschritt eine Verdichtung des Verdichtungsraums mit einer vorbestimmten Kraft. Bei einem gewissen Grad der Kompression reicht die Kraft nicht mehr zu einer weiteren Kompression aus. In diesem Moment bleibt der Amboss stehen. Gemäss diesem Aspekt der Erfindung wird zu diesem Zeitpunkt die Position des Ambosses, insbesondere dessen Oberteil ermittelt. Bei einer vordefinierten Kraft sollte die Position des Ambosses bei vorbestimmten zu verschweissenden Gegenständen immer gleich sein. Eine Position des Ambosses, die von dieser Sollposition abweicht, ist ein Indiz dafür, dass die Gegenstände nicht korrekt im Verdichtungsraum positioniert sein könnten oder dass Gegenstände fehlen oder im Fall von Litzen einzelne Drähte nicht vorhanden sind. Wenn eine zu grosse Abweichung von der Sollposition detektiert wird, wird die Schweissung nicht durchgeführt. Wenn die Position innerhalb von bestimmten Toleranzen einem vorbestimmten Sollwert entspricht, wird der Verdichtungsraum bzw. die darin enthaltenen Gegenstände mit Ultraschall beaufschlagt und dabei verschweisst. Gleichzeitig wird der Amboss in einem zweiten Verdichtungsschritt mit einer grösseren Kraft beaufschlagt, sodass der Verdichtungsraum weiter komprimiert wird.

Die Erfindung wird im Folgenden anhand der Zeichnungen in Ausführungsbeispielen näher erläutert. Es zeigen:
- Figur 1: eine Explosionsdarstellung einer erfindungsgemässen Ultraschallschweissvorrichtung,
- Figur 2: eine Explosionszeichnung des Antriebs für einen Amboss einer Vorrichtung gemäss Figur 1,
- Figur 3: eine Explosionsdarstellung eines Ambosses einer Vorrichtung gemäss Figur 1,
- Figur 4: einen Explosionsdarstellung des Seitenschiebers einer Vorrichtung gemäss Figur 1,
- Figur 5: eine Explosionsdarstellung eines Antriebs des Seitenschiebers gemäss Figur 4,
- Figur 6: eine dreidimensionale Darstellung einer Sonotrodenspitze einer Vorrichtung gemäss Figur 1,
- Figur 7: Draufsicht auf den Verdichtungsraum einer Vorrichtung gemäss Figur 1,
- Figuren 8a bis 8j: Schematische Darstellung einzelner Schritte eines erfindungsgemässen Verfahrens,
- Figur 9: Seitenansicht einer erfindungsgemässen Ultraschallvorrichtung,
- Figur 10: Perspektivische Darstellung einer erfindungsgemässen Ultraschallvorrichtung, und
- Figur 11: schematische Darstellung einer erfindungsgemässen Vorrichtung.

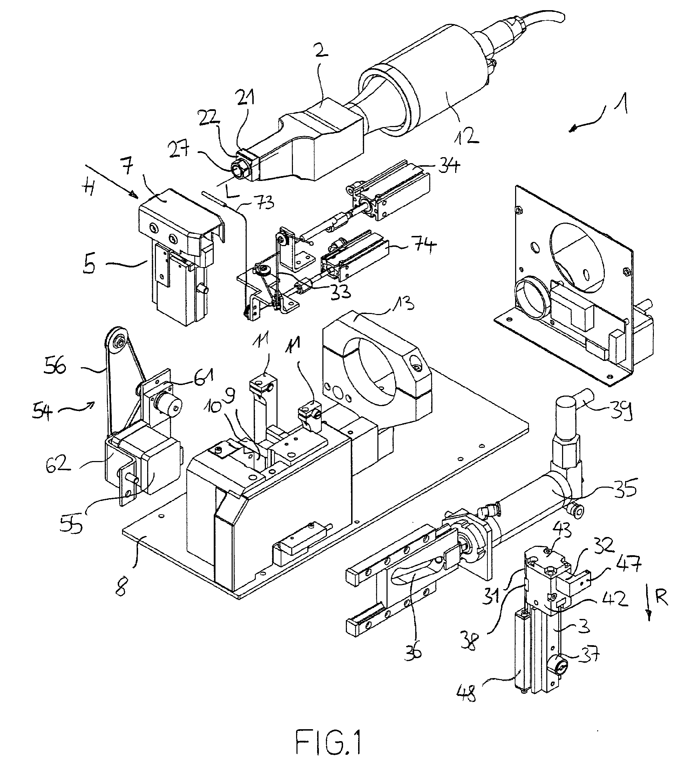

In Figur 1 ist einer Explosionsdarstellung eine erfindungsgemässe Ultraschallschweissvorrichtung 1 gezeigt. Die Ultraschallschweissvorrichtung 1 weist eine Sonotrode 2 auf, mit welcher zu verschweissende Gegenstände wie beispielsweise Litzen mit Ultraschall baufschlagbar sind. Die Sonotrode 2 ist mit einem Konverter 12 in an sich bekannter Art und Weise in Ultraschallschwingungen versetzbar. Der Konverter 12 ist mittels einem nicht gezeigten Ultrschallgenerator in Schwingungen versetzbar. Die Sonotrode 2 weist eine Sonotrodenspitze 22 auf, welche mittels einer Befestigungsschraube 27 an der Sonotrode 2 befestigt ist. Die Sonotrodenspitze 2 weist eine Arbeitsfläche 21 auf, auf welche die zu verschweissenden Gegenstände gelegt und durch welche sie mit Ultraschallschwingungen beaufschlagbar sind.

Die Vorrichtung 1 weist ausserdem einen Amboss 3 auf. Der Amboss 3 weist Halterungen 48 auf. An den Halterungen 48 ist ein Seitenteil 31 und ein Oberteil 32 angeordnet. Das Seitenteil 31 ist an einem mit den Halterungen 48 gehaltenen Halteblock 42 angebracht. Das Oberteil 32 ist verschiebbar im Halteblock 42 gehalten. Eine Abdeckung 43 deckt das verschiebbar in einer Führung gehaltene Oberteil 32 ab. Das Seitenteil 31 ist mit einer Hartmetallplatte 38 versehen. Die Hartmetallplatte 38 liegt am Seitenteil 31 auf der einem Verdichtungsraum zugewandten Seite. Der Amboss 3 ist mit einem Führungszapfen 37 versehen, mit welchem er in einer Führungskulisse 36 geführt ist. Die Führungskulisse 36 ist über einen Pneumatikzylinder 35 bewegbar, wodurch der Amboss 3 in der Richtung R auf und ab bewegbar ist. Der Druckzylinder 35 ist über eine Druckleitung 39 mit einem nicht genauer gezeigten Druckerzeuger verbunden. Das Oberteil 31 weist eine Bohrung 47 auf, in welche ein Seilzug 33 befestigbar ist. Mittels dem Seilzug 33 lässt sich das Oberteil 32 in der Führung im Halteblock 42 bewegen. Der Seilzug 33 ist über nicht näher bezeichnete Umlenkrollen mit einem Antrieb 34 für das Oberteil 32 verbunden.

Gegenüberliegend zum Amboss 3 ist ein Seitenschieber 5 vorgesehen. Der Seitenschieber 5 ist durch eine Schutzhaube 7 abgedeckt. Die Schutzhaube 7 ist mittels eines Seilzugs 73 betätigbar. Der Seilzug 37 ist über nicht näher bezeichnete Umlenkrollen mit einem pneumatischen Antrieb 74 verbunden.

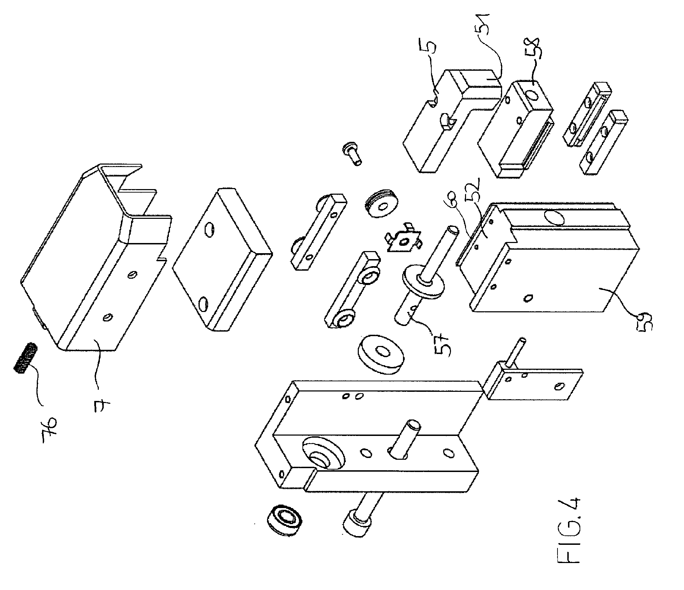

Der Seitenschieber 5 ist mit einem Antrieb 54 in einer Richtung H horizontal betätigbar. Der Antrieb 54 weist einen Elektromotor 55 auf. Der Elektromotor 55 ist über einen Zahnriemen 56 mit einer in Figur 1 nicht näher gezeigten Spindel (siehe Figur 4) verbunden, welche den Seitenschieber betätigt. An einer Halteplatte, welche den Motor 55 trägt, ist ausserdem ein digitaler Messwertgeber 61 angeordnet. Mit dem digitalen Messwertgeber 61 lässt sich die Position der Spindel und damit des Seitenschiebers 5 jederzeit genau ermitteln.

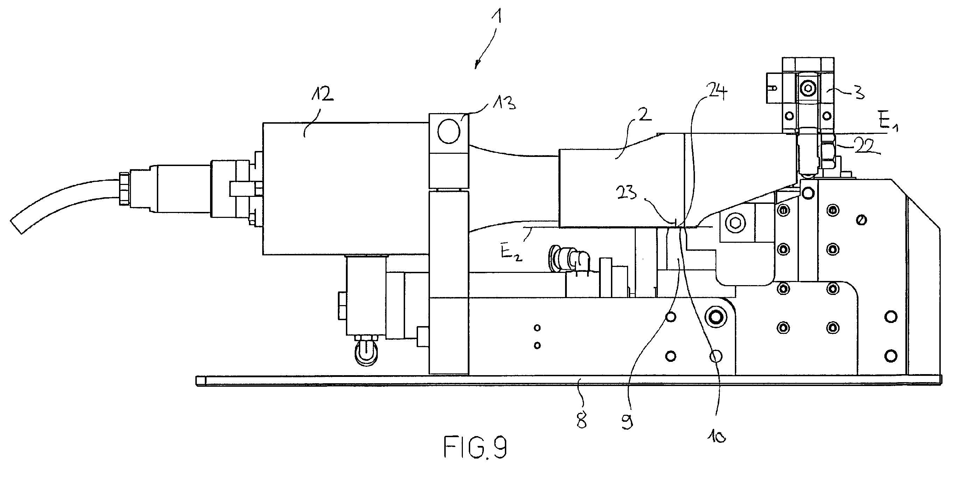

Die Ultraschallschweissvorrichtung 1 ist auf einer Grundplatte 8 montiert. Auf der Grundplatte 8 ist ein Haltebock 9 vorgesehen, der eine Auflagefläche 10 aufweist. Die Sonotrode 2 wird über einen Befestigungsring 13 mit einer flachen Kontaktfläche (siehe Figur 9) gegen die Auflagefläche 10 gedrückt. Dadurch ist die Position der Längsachse L der Sonotrode 2 genau definiert. Die Position der Sonotrode 2 in einer Ebene parallel zur Längsachse wird durch zwei seitliche Stellschrauben 11 eingestellt.

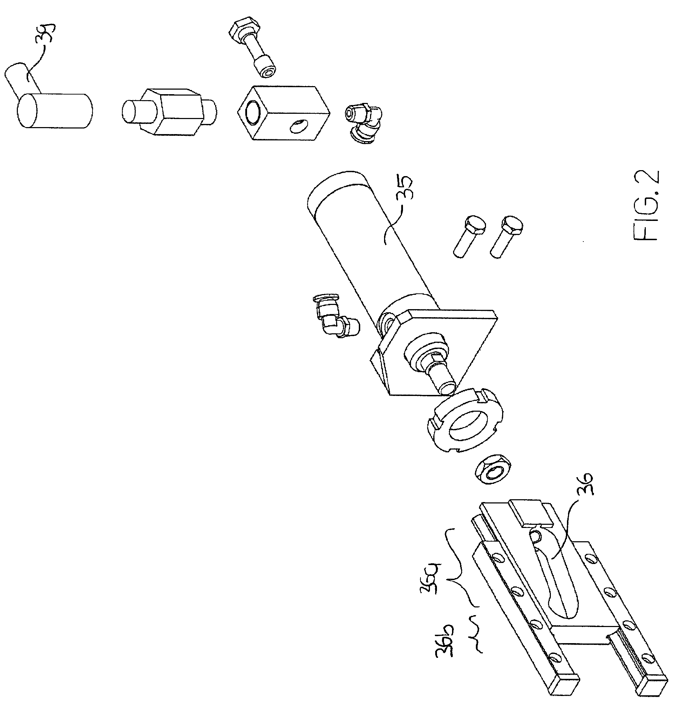

Figur 2 zeigt eine detailliertere Darstellung des Antriebs für den Amboss 3. Mittels des Pneumatikzylinders 35 wird ein Element mit einer Führungskulisse 36 betätigt. Die Führungskulisse 36 weist einen ersten Abschnitt 36a und einen zweiten Abschnitt 36b auf. Die Abschnitte 36a bzw. 36b stehen im Winkel zueinander. Dadurch ergibt sich, dass bei gleichbleibender Geschwindigkeit des Pneumatikzylinders der Amboss in einem ersten Verdichtungsabschnitt schneller und mit geringerer Kraft und in einem zweiten Verdichtungsabschnitt mit grösserer Kraft und langsamer bewegt wird. Der Pneumatikzylinder 35 ist typischerweise 32 mm, 10 bar. Die Abschnitte 36a, 36b der Führungskulisse 36 stehen typischerweise in einem Winkel von 10° zu der Bewegungsrichtung des Pneumatikzylinders 35. Dadurch ergibt sich ein Übersetzungsverhältnis von ca. 5. Ein magnetischer Linearwertgeber (nicht gezeigt) kann im Bereich der Führungskulisse 36 angeordnet sein. Damit lässt sich die Position des Führungszapfen 37 bestimmen. Dadurch ergibt sich indirekt auch die Vertikalposition des Amboss 3, insbesondere die Vertikalposition des Oberteils 32. Aufgrund der Übersetzung durch die Führungskulisse ist die Messung der Position des Führungszapfen 37 mit dem gleichen Messgeber präziser als die direkte Messung der Vertikalposition des Amboss 3. Der Magnetfeldsensor ist z.B. ein MLFK 08T7101 von Baumer Electric.

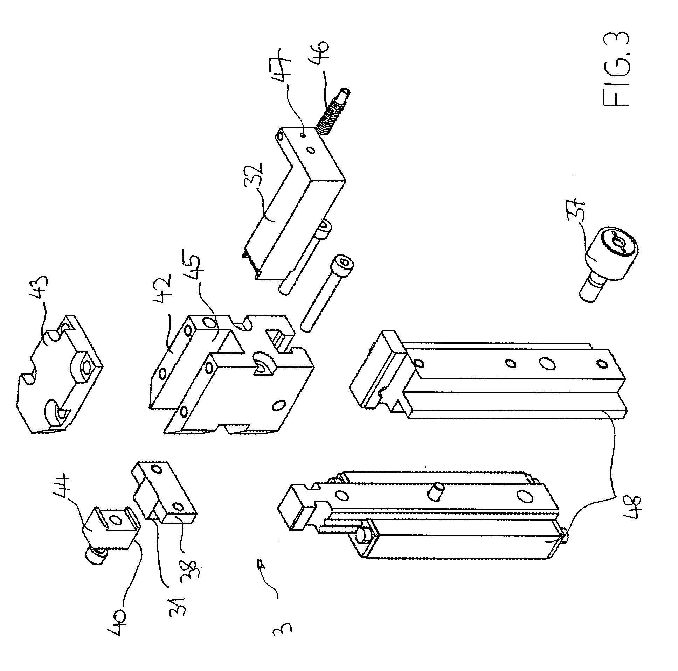

In Figur 3 ist detaillierter der Amboss 3 gezeigt. Auf den beiden Teilen einer Halterung 48 ist der Halteblock 42 angeordnet. Der Halteblock 42 weist eine Führung 45 auf. Der Oberteil 42 des Ambosses 3 ist verschiebbar in der Führung 45 gelagert. Der Oberteil 42 ist mit einer Spitze 44 versehen, welche eine gegen einen Verdichtungsraum richtbare Begrenzungsfläche 40 aufweist. Unterhalb des Oberteils 32 ist eine Hartmetallplatte 38 angeordnet, welche ein den Verdichtungsraum begrenzendes Seitenteil 31 bildet. Das Oberteil ist über einen in die Bohrung 47 eingesetzten Seilzug betätigbar. Eine Druckfeder 46 drückt das Oberteil 32 vom Seitenschieber 5 weg, wenn das Oberteil 32 nicht über den in Figur 3 nicht gezeigten Seilzug gegen die Federkraft gegen den Seitenschieber 5 gezogen wird. Das Oberteil 32 in der Führung 45 ist durch eine Abdeckung 43 abgedeckt und gehalten. Die einzelnen in Figur 3 gezeigten Teile sind auf herkömmliche Weise mittels nicht näher bezeichneten Schrauben miteinander verbunden.

An der Halterung 48 ist ein Führungsmittel 37 in der Form eines eingeschraubten Zapfens vorhanden.

Der Seitenschieber 5, welcher neben der Sonotrodenspitze 22 (siehe Figur 1) und dem Seitenteil 31 sowie dem Oberteil 32 des Ambosses 33 als viertes Element einen Verdichtungsraum begrenzt ist durch einen Halteblock 59 (siehe Figur 4) gehalten. In einer Führung 60 des Halteblocks 59 ist entlang einer Führungsfläche 52 eine Halterung 58 verschiebbar. Auf der Halterung 58 ist der Seitenschieber 5 befestigt. Der Seitenschieber 5 weist eine gegen einen Verdichtungsraum hin gerichtete Begrenzungsfläche 51 auf. Die Halterung 58 und damit der Seitenschieber 5 ist mittels einer Spindel 57 in einer horizontalen Richtung bewegbar. In Figur 4 ist ausserdem eine Schutzhaube 7 gezeigt, welche zum Abdecken eines Verdichtungsraums während eines Schweissvorgangs dient. Die Schutzhaube 7 ist gegen eine Druckfeder 76 gehalten und lässt sich über einen Seilzug 73 (siehe Figur 1) mit einem Pneumatikzylinder 74 betätigen. Die in Figur 4 gezeigten Teile sind in an sich bekannter Art und Weise, beispielsweise durch Schrauben miteinander verbunden.

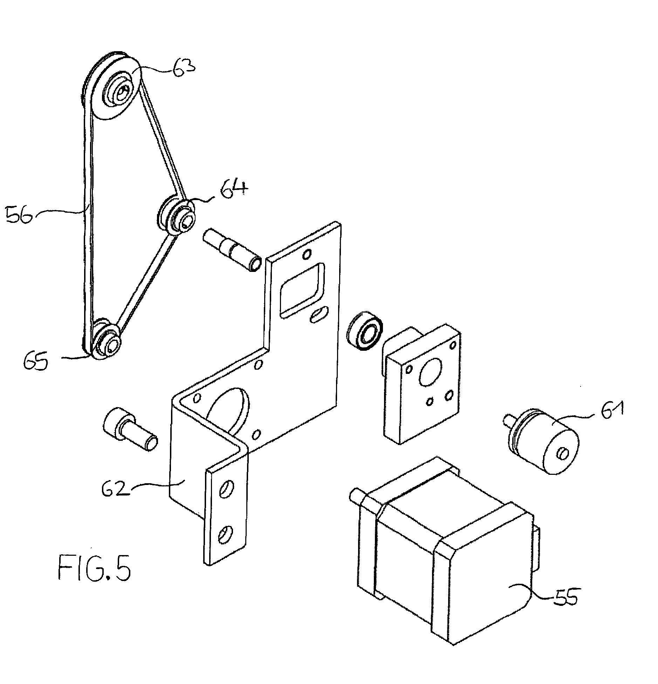

In Figur 5 ist der Antrieb für den Seitenschieber 5 gezeigt. An einer Halteplatte 62 ist ein Motor 55 befestigt, welcher eine Umlenkrolle 65 betätigt. Ein Zahnriemen 56 ist über die Umlenkrolle 65 und über zwei weitere Umlenkrollen 63, 64 geführt. Mit der Umlenkrolle 64 ist ein digitaler Messwertgeber, beispielsweise ein digitaler Inkrementgeber (BSM1605K100-F-4-H von Baumer Electric) verbunden. Die Spindel zur Betätigung des Seitenschiebers 5 ist mit der Umlenkrolle 63 verbunden, sodass der Seitenschieber 5 durch Betätigung des Motors 55 hin und her verschoben werden kann. Der Messwertgeber 61 erlaubt es, jederzeit die genaue Position des Seitenschiebers zu ermitteln.

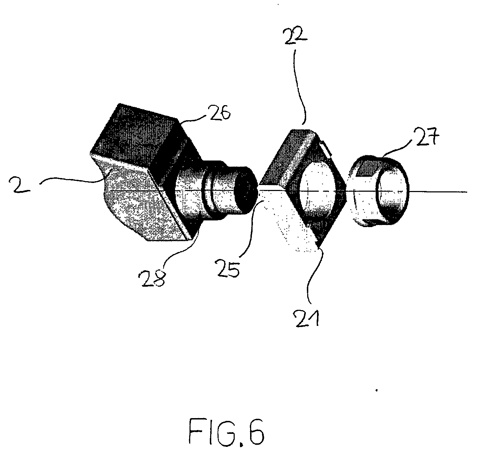

In Figur 6 sind die Details der Konstruktion der Sonotrodenspitze 22 gezeigt. Die Sonotrodenspitze 22 ist mit einer Befestigungsschraube 27 auf einem Gewindezapfen 28 der Sonotrode 2 befestigt. Die Sonotrode 2 weist an dem gegen die Sonotrodenspitze 22 gerichteten Ende eine Vertiefung 26 auf, welche kongruent zu einem Vorsprung 25 an der Schweissspitze 22 ausgebildet ist. Dadurch lässt sich eine genau definierte Positionierung der Sonotrodenspitze 22 auf der Sonotrode 2 erzielen.

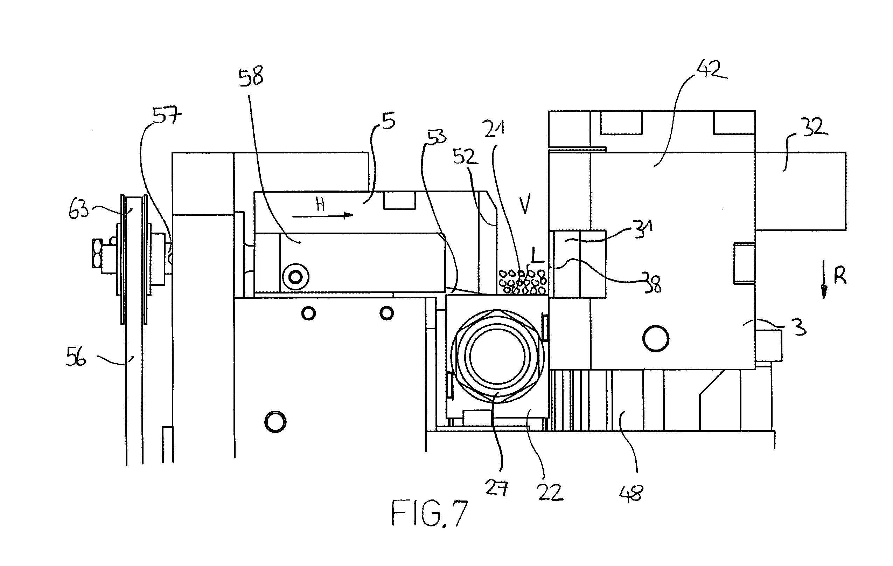

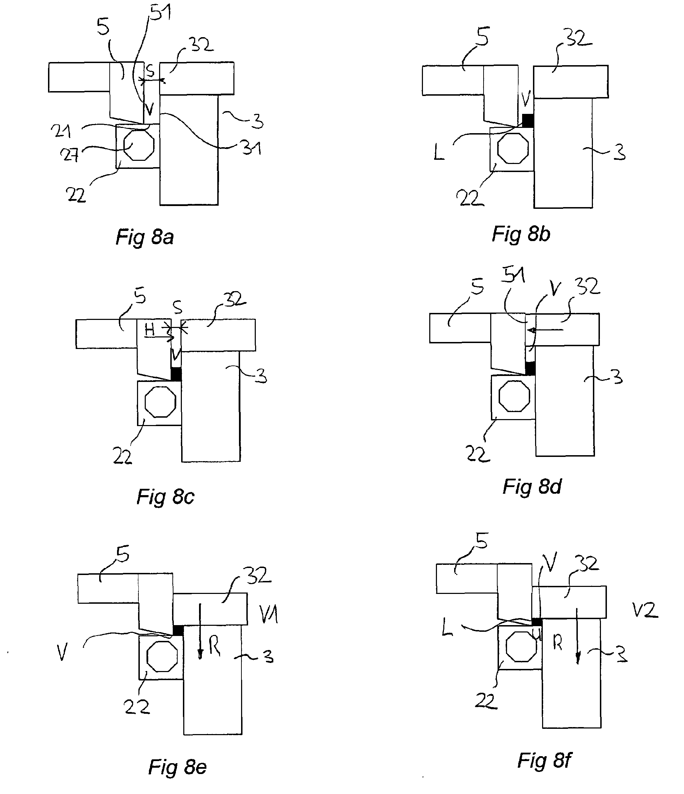

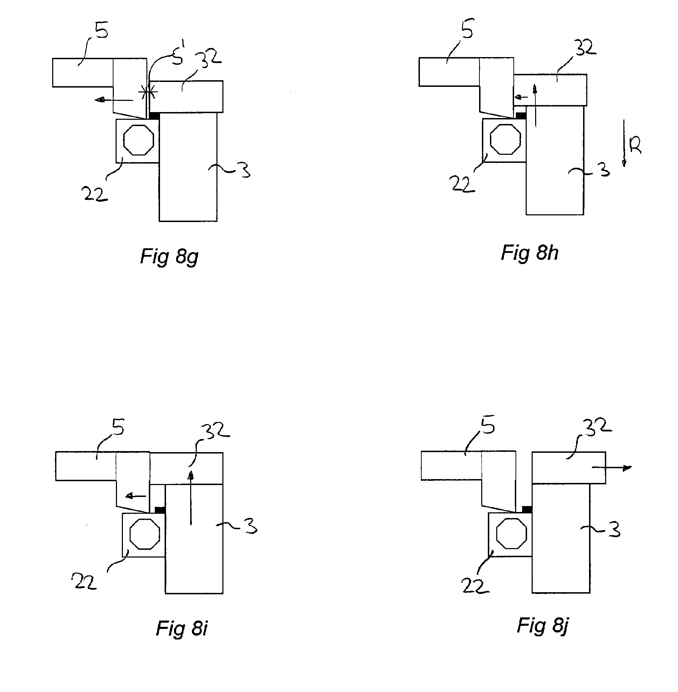

In Figur 7 ist eine Draufsicht in Längsrichtung L (siehe Figur 1) auf die erfindungsgemässe Schweissvorrichtung gezeigt. Ein Verdichtungsraum V wird durch die Elemente Sonotrodenspitze 22, Amboss 3 mit Seitenteil 31 und Oberteil 32 sowie durch den Seitenschieber 5 begrenzt. In den Verdichtungsraum V sind Litzen L eingelegt. Zum Verschweissen werden zuerst die Litzen L in einen Zwischenraum zwischen den Seitenschieber 5 und den Seitenteil 31 des Ambosses 3 gelegt. Danach wird der Seitenschieber 5 in Richtung H bewegt, sodass die Begrenzungsfläche 52 gegen die Litzen L geschoben wird. Sobald die Begrenzungsfläche 52 in der gewünschten Position ist, wird der Oberteil 32 des Ambosses 3 gegen die Begrenzungsfläche 52 in Anschlag gebracht. Anschliessend wird der Amboss 3 in Richtung R vertikal bewegt. Dadurch wird die Grösse des Verdichtungsraums V verringert. Der detaillierte Ablauf des Schweissvorgangs ist in den Figuren 8a bis 8j gezeigt. Die Sonotrodenspitze 22 ist mit einer Mutter 27 an der Sonotrode befestigt. Die der Sonotrodenspitzen 22 zugewandte Unterseite des Seitenschiebers 5 weist eine Abschrägung auf. Die Abschrägung ergibt einen sich von der Begrenzungsfläche 52 weg erweiternden Spalt 53. Der Spalt 53 verhindert das Einklemmen von Litzen und vereinfacht die Verschiebbarkeit. Am Amboss 3 ist ausserdem die Hartmetallplatte 38 aus gezeigt.

Die Schrittabfolge des erfindungsgemässen Verfahrens ist in den Figuren 8a bis 8j gezeigt. Figur 8a zeigt die Initialstellung der den Verdichtungsraum V begrenzenden Elemente, namentlich Sonotrodenspitze 22, Seitenteil 31 und Oberteil 32 eines Amboss 3 sowie den Seitenschieber 5. In dieser Ausgangssituation befinden sich der Seitenschieber 5 und das Oberteil 32 in ihrer lateral äusseren Position. Der Amboss 3 befindet sich in einer vertikal oberen Position. In Figur 8b werden Litzen 7, welche miteinander verschweisst werden sollen in den noch offenen Verdichtungsraum V eingelegt.

In Figur 8c wird der Seitenschieber 5 in horizontaler Richtung H gegen den Verdichtungsraum V verschoben, bis sich eine in Abhängigkeit der zu verschweissenden Litzen vordefinierte Spaltbreite S einstellt. Typischerweise beträgt die Spaltbreite für 40 mm² Litzen 8,9 mm. Die Bewegung des Seitenschiebers 5 erfolgt durch Betätigung des Motors 55 (siehe Figuren 1 und 5). Dabei wird die Position durch den Messwertgeber 61 gemessen, an eine Steuereinrichtung weitergegeben und registriert. In einem nächsten Schritt (siehe Figur 8d) wird der Oberteil 32 des Ambosses gegen die Begrenzungsfläche 51 des Seitenschiebers 5 in Anschlag gebracht. Die Bewegung des Oberteils 32 des Ambosses 3 erfolgt durch Betätigung des Seilzugs 33 mit dem Pneumatikantrieb 34.

Gemäss Figur 8e erfolgt in einem ersten Verdichtungsschritt V1 eine Verdichtung des Verdichtungsraums V. Dazu wird der Amboss 3 durch Betätigung des Pneumatikzylinders 35 in Richtung R nach unten gefahren. Die dabei aufgebrachte Kraft ist konstant. Bei einem bestimmten Grad der Verdichtung bewegt sich der Amboss 3 in Richtung R nicht weiter. Das Ende der Verdichtungsphase V1 ist erreicht. In diesem Zeitpunkt wird die Vertikalposition des Ambosses 3 ermittelt. Wenn die Vertikalposition nicht innerhalb von gewissen Toleranzen einem Sollwert entspricht, wird dies als Indiz dafür genommen, dass die Litzen L nicht korrekt im Verdichtungsraum V eingelegt sind. Beispielsweise könnten Litzen schräg eingelegt sein, einzelne Drähte fehlen oder aus einer vorherigen Schweissung noch Überreste im Verdichtungsraum V verblieben sein. Der Sollwert für die Position des Ambosses 3 ist abhängig von der Art der zu verschweissenden Litzen, insbesondere Grösse und Anzahl. Die Toleranz des Sollwerts der Position des Ambosses 3 kann typischerweise 100µm betragen. Wenn die Position des Ambosses 3 der Sollposition entspricht, wird in einem nächsten Schritt (siehe Figur 8f) mit der eigentlichen Schweissung begonnen. In einem zweiten Verdichtungsschritt V2 wird dazu gemäss Figur 8f der Amboss 3 weiter in Richtung R bewegt. Dazu ist eine im Vergleich zum ersten Verdichtungsschritt V1 grössere Kraft erforderlich. Gleichzeitig werden mit der Ultraschallsonotrodenspitze 22 Ultraschallschwingungen U auf die Litzen L gegeben. Dabei erfolgt unter weiterer Komprimierung des Verdichtungsraums V eine Verschweissung des Litzen.

Die Verschweissung dauert eine bestimmte Zeit. Das Ende der Veschweissung wird durch bestimmte, vorbestimmbare Parameter definiert. Es ist denkbar, solange zu Schweissen, bis eine vordefinierte Endhöhe des Ambosses 3 erreicht ist, bis ein vordefinierter Energiebetrag durch einen Ultaschallgenerator abgegeben worden ist, oder bis eine vorbestimmte Zeitspanne erreicht ist. Der vom Amboss während der zweiten Verdichtungsphase ausgeübte Druck ist dabei konstant. Auf diese Weise kann der Druckanstieg überprüft werden. Es ist auch möglich, den Enddruck am Ende der Schweissung oder gegebenenfalls einen Druckabfall während der Schweissung zu ermitteln.

Während der einzelnen Verfahrensschritte gemäss 8a bis 8f werden laufend die Position des Seitenschiebers 5 in horizontaler Richtung h und die Position des Ambosses 3 in vertikaler Richtung (Richtung R) überwacht. Dazu dienen die Messwertgeber 61 für den Seitenschieber 5 und ein Messwertgeber für die Vertikalposition des Ambosses. Die vom Amboss 3 auf die Litzen ausgeübte Kraft wird indirekt über einen Drucksensor (nicht näher bezeichnet) erfasst, der im Pneumatikzylinder 35 angeordnet ist.

Sobald die Verschweissung beendet ist, wird (siehe Figur 8g) die Ultraschalleinleitung gestoppt und in einem ersten Schritt wird der Seitenschieber 5 geringfügig, typischerweise um 250 - 400 µm geöffnet, sodass sich zwischen dem Seitenschieber 5 und dem Oberteil 32 des Ambosses 3 ein kleiner Spalt S' ergibt. Da der Oberteil 32 durch den Amboss 3 gegen die Litzen gedrückt bleibt, wird er vom Antrieb 34 nicht sofort gegen den Seitenschieber 5 bewegt. Der Oberteil 32 ist auf den Litzen L verklemmt. In einem nächsten Schritt (siehe Figur 8h) wird der Amboss gegen die Richtung R vertikal nach oben gefahren. Dabei wird der Kontakt zwischen den verschweissten Litzen und dem Oberteil 32 aufgehoben. Aufgrund des Antriebs 34 wird der Oberteil 32 wieder gegen den Seitenschieber 5 in Anlage gebracht. Durch die Bewegungen von Seitenschieber 5 (in Figur 8g) und des Oberteils 32 (Figur 8h) werden allfällig vorhandene einzelne Drähte in den Verdichtungsraum hinein bewegt. Ein Verklemmen von Drähten beispielsweise zwischen dem Oberteil 32 und dem Seitenteil 31 des Ambosses 3 wird vermieden.

In einem weiteren Schritt wird der Seitenschieber 5 weiter geöffnet. Gleichzeitig wird der Amboss 3 nach oben gefahren. In Figur 8j nehmen die den Verdichtungsraum V begrenzenden Teile wieder die Position gemäss Figur 8a ein. Die Verschweissten Litzen können entnommen werden und neue zu verschweissende Litzen können in den offenen Verdichtungsraum eingesetzt werden.

Typischerweise erfolgt ein Schweissdurchgang gemäss Figuren 8a bis 8j in 100 ms bis 2 Sekunden. Dabei wird der Amboss 3 typischerweise mit einer Kraft von 2500 N im ersten Verdichtungszeitraum V1 und im zweiten Verdichtungszeitraum V2 bewegt. Die Position des Seitenschiebers 5 (horizontal) und die Vertikalposition des Ambosses 3 wird typischerweise alle 1 - 2 ms gemessen und abgespeichert.

Figur 9 zeigt eine Seitenansicht der erfindungsgemässen Schweisszange. Mit einer flachen Kontaktfläche 24 auf der Unterseite der Sonotrode liegt die Sonotrode 2 auf der Auflagefläche 10 des Auflagebocks 9 auf. Die Befestigung erfolgt durch Anpressung der Sonotrode 2 mittels eines Befestigungsrings 13. Die Kontaktfläche 24 an der Sonotorde liegt benachbart zu einem longitudinalen Schwingungsnullpunkt 23. Wenn die Sonotrode 2 durch den Konverter 12 in Resonanz zu Schwingungen angetrieben wird, herrscht im Bereich der Sonotrodenspitze 22 ein Schwingungsmaximum und im Bereich der Kontaktfläche 24 ein Schwingungsminimum 23. Die Arbeitsfläche 21 verläuft parallel zur Kontaktfläche 10 mit einer maximalen Abweichung von 0,01 mm.

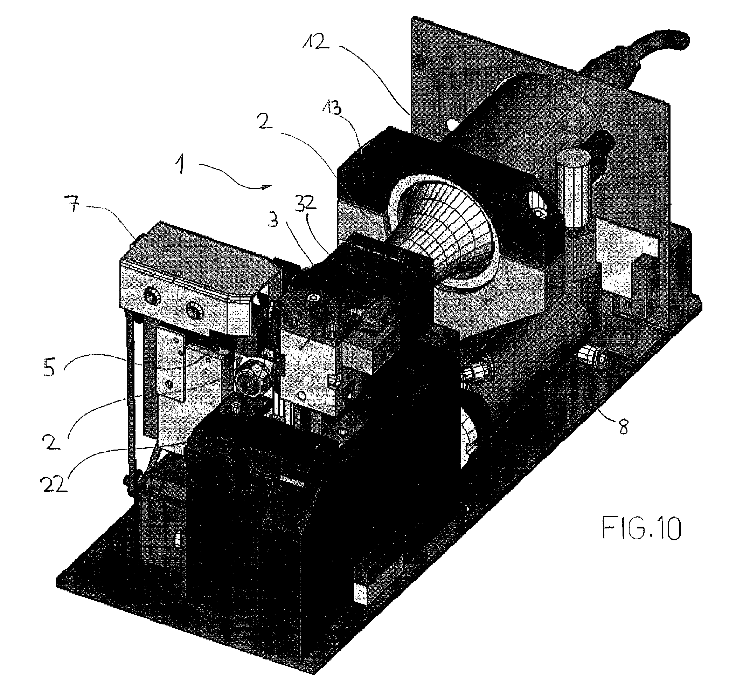

In Figur 10 ist in perspektivischer Darstellung die erfindungsgemässe Schweissvorrichtung 1 gezeigt. Die Darstellung entspricht im Wesentlichen der Explosionsdarstellung gemäss Figur 1. Gleiche Bezugszeichen bezeichnen gleiche Teile.

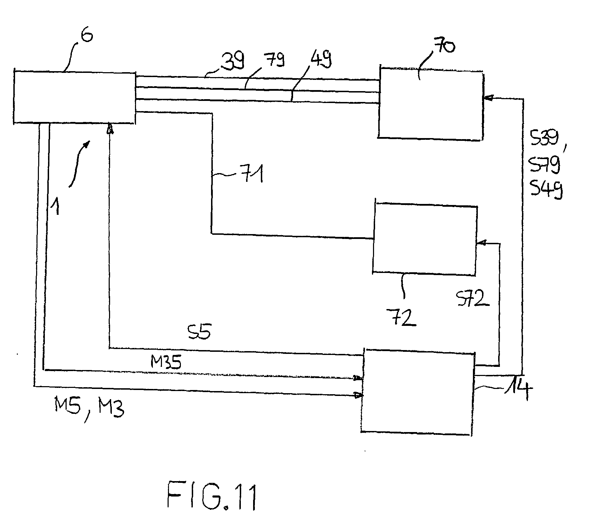

Figur 11 zeigt schematisch die erfindungsgemässe Schweissvorrichtung 1 mit den entsprechenden Anschlüssen.

Die erfindungsgemässe Vorrichtung 1 ist in einem in den übrigen Zeichnungen nicht gezeigten Gehäuse 6 angeordnet. Das Gehäuse 6 weist einen Zugang zum Verdichtungsraum zum Einlegen der zu verschweissenden Litzen auf. Während dem Verschweissen ist der Zugang zum Schutz des Betreibers durch die verschiebbare Schutzhaube 7 abgeschlossen (siehe auch Figur 10). Es ist ausserdem denkbar, beispielsweise mit einem Zylinderschalter die Position der Schutzhaube zu erfassen. Eine Schweissung kann nicht ausgelöst werden, wenn die Schutzhaube nicht geschlossen ist, wenn beispielsweise ein Finger des Benutzers im Verdichtungsraum eingekleppt wäre. Aus dem Gehäuse 6 ist eine Druckleitung 39 zur Betätigung des Ambosses, eine Druckleitung 79 zur Betätigung der Schutzhaube 7 sowie eine Druckleitung 49 zur Betätigung des Oberteils 32 des Ambosses 3 zu einem schematisch gezeigten Drukkerzeuger 70 geführt. Die Druckleitungen 39, 79 und 49 können zu einem einzelnen Strang zusammengefasst sein. Sie sind z.B. aus einem flexiblen Kunststoffmaterial ausgebildet. Ihre Länge beträgt ca. 1,5 m bis 2 m. Dadurch kann das Gehäuse 6 der Ultraschallschweissvorrichtung 1 frei bewegt werden. Über ein Hochspannungskabel 71 ist der in Figur 1 nicht gezeigte Konverter 12 mit einem Ultraschallgenerator 72 verbunden, der in an sich bekannter Art und Weise aufgebaut ist. Die Vorrichtung 1 kann ausserdem mit einer nicht gezeigten Kühlluftzufuhr versehen sein. Damit lässt sich insbesondere der Konverter und/oder die Sonotrodenspitze mit Pressluft beblasen. Die Pressluft zum Kühlen kann beispielsweise ebenfalls durch den Druckerzeuger 70, gegebenenfalls über ein Reduktionsventil bereitgestellt werden. Die Ultraschallvorrichtung 1 wird durch eine Rechneranordnung 14 betrieben. Die Rechneranordnung 14 betätigt über Steuersignale S72 den Generator. Ausserdem werden über Steuersignale S39, S79 und S49 die Antriebe 34, 74 und 35 für den Amboss und den Seitenschieber 7 kontrolliert. Die Rechneranordnung 14 betätigt ausserdem über Steuersignale S5 den Motor 55 zur Betätigung des Seitenschiebers 5. Der Rechneranordnung 14 werden ausserdem Messsignale M3 im Hinblick auf die vertikale Position des Ambosses 3 und M5 im Hinblick auf die Position des Seitenschieber 5 übermittelt. Die Initialposition des Seitenschiebers kann beispielsweise durch einen induktiven Endschalter bestimmt werden. Der Seitenschieber wird bis in die durch den Endschalter definierte Initialposition verschoben. Ausgehend von dieser Position wird dann mit dem digitalen Messwertgeber laufend die aktuelle Position des sich bewegenden Seitenschiebers ermittelt. Beim nächsten Einschalten der Vorrichtung erfolgt wiederum eine Initialisierung. Ausserdem werden aus dem Pneumatikzylinder 35 Messsignale M35 an die Rechneranordnung 14 übermittelt. Die Messsignale M35 repräsentieren den Druck im Pneumatikzylinder 35. Sie sind ein Mass der vom Amboss 3 in vertikaler Richtung auf die Litzen L ausgeübte Kraft. Die Messwerte M3, M5 und M35 werden laufend in der Rechneranordnung 14 gespeichert. Sie können zu statistischen Zwecken bearbeitet werden und zur Qualitätssicherung verwendet werden. Die Messwerte oder auch andere für die Schweissung relevante Parameter können ausserdem auf einer in Figur 11 nicht näher gezeigten Visualisierungsanordnung, typischerweise ein Bildschirm, dargestellt werden. Es ist auch möglich, grafische Darstellung der Messwerte in Form von Kurven darzustellen.

## Patentansprüche

1. Ultraschallschweissvorrichtung (1) zum Verbinden von Gegenständen wie elektrischen Leitern, insbesondere von Litzen (L) ,
mit einem Verdichtungsraum (V) zur Aufnahme der Gegenstände (L),
wobei der Verdichtungsraum (V) wenigstens auf einer Seite durch eine Arbeitsfläche (21) einer Sonotrodenspitze (22) einer Sonotrode (2) begrenzt ist, wobei die Sonotrode (2) derart in Resonanz betreibbar ist, dass sie wenigstens einen longitudinalen Schwingungsnullpunkt aufweist,
**dadurch gekennzeichnet, dass** die Sonotrode (2) im Bereich (23) des Schwingungsnullpunktes eine flache Kontaktfläche (24) aufweist, welche flächig auf einer flachen Auflagefläche (10) aufliegt.

2. Schweissvorrichtung nach Anspruch 1, **dadurch gekennzeichnet, dass** die Arbeitsfläche (21) der Sonotrode (2) bezogen auf die Kontaktfläche (24) eine vorbestimmbare Lage aufweist, insbesondere dazu parallel verläuft.

3. Schweissvorrichtung nach Anspruch 1 oder 2, **dadurch gekennzeichnet, dass** die Schweissvorrichtung (1) Stellmittel (11) aufweist, mittels welchen die Längsachse (L) der Sonotrode (2) in einer Ebene parallel zur Auflagefläche (10) verstellbar ist.

4. Schweissvorrichtung, insbesondere nach einem der Ansprüche 1 bis 3, **dadurch gekennzeichnet, dass** eine Sonotrode (2) eine separate Sonotrodenspitze (22) aufweist, welche mit Führungsmitteln (25, 26) versehen ist, mit welche die Sonotrodenspitze (22) in einer vordefinierten Winkelstellung an der Sonotrode (2) befestigbar ist.

5. Schweissvorrichtung, insbesondere nach einem der Ansprüche 1 bis 4, mit einem Verdichtungsraum (V), welcher durch eine Arbeitsfläche (21) einer Sonotrodenspitze (22), durch einen Amboss (3) mit einem vertikal verschiebbaren Seitenteil (31) und einem horizontal verschiebbaren Oberteil (32) und durch einen Seitenschieber (5) begrenzt ist,
**dadurch gekennzeichnet, dass** der Oberteil (32) und/oder eine den Verdichtungsraum (V) abdeckende Schutzhaube (7) mit einem Seilzug (33, 73) je mit einer, insbesondere pneumatischen Antriebsanordnung (34, 73) verbunden und betätigbar ist.

6. Ultraschallschweissvorrichtung, insbesondere nach einem der Ansprüche 1 bis 5, **dadurch gekennzeichnet, dass** der Verdichtungsraum wenigstens an einer Begrenzungsseite, insbesondere an einem Seitenteil (31) eines Ambosses (3) eine Schutzplatte, insbesondere eine Hartmetallplatte (38) aufweist.

7. Ultraschallschweissvorrichtung, insbesondere nach einem der Ansprüche 1 bis 6, mit einem Verdichtungsraum (V) der auf einer Seite durch eine Begrenzungsfläche (51) eines Seitenschiebers (5) begrenzt ist, wobei der Seitenschieber (5) entlang einer Arbeitsfläche (21) einer Sonotrode (2) in einer Richtung senkrecht zu der Begrenzungsfläche (52) verschiebbar ist, wobei die gegen die Arbeitsfläche (21) gerichtete Seite des Seitenschiebers (5) derart abgeschrägt ist, dass zwischen der Arbeitsfläche (21) und dem Seitenschieber (5) der Sonotrodenspitze (22) von der Begrenzungsfläche (52) her ein sich erweiternder Spalt (52) gebildet ist.

8. Ultraschallschweissvorrichtung, insbesondere nach einem Ansprüche 1 bis 7, mit einem Verdichtungsraum (V), der teilweise durch einen gegen einen Sonotrodenspitze (22) bewegbaren Amboss (3) begrenzt ist, **dadurch gekennzeichnet, dass** der Amboss über ein Getriebe mit unterschiedlichen Übersetzungen innerhalb eines Hubs des Amboss mit einem Antrieb verbunden ist, dass insbesondere der Amboss (3) ein in einer Führungskulisse (36) gelagertes Führungsmittel (37) aufweist, wobei die Führungskulisse (36) wenigstens zwei im Winkel zueinander stehende Führungsabschnitte (36a, 36b) aufweist.

9. Ultraschallschweissvorrichtung nach Anspruch 8, **dadurch gekennzeichnet, dass** die Führungskulisse (36) derart ausgebildet ist, dass bei gleichbleibender Geschwindigkeit einer Antriebseinrichtung (54) die Geschwindigkeit des Ambosses (3) am Anfang einer Verdichtungsphase (V1) grösser ist als am Ende der Verdichtungsphase (V2).

10. Ultraschallschweissvorrichtung, insbesondere nach einem der Ansprüche 1 bis 9, mit wenigstens einer pneumatischen Antriebsvorrichtung (34, 35, 74) zur Bewegung des Ambosses, **dadurch gekennzeichnet, dass** im Pneumatikzylinder (35) Druckmessmittel angeordnet sind, mittels welchen der Druck im Pneumatikzylinder (35) und damit die mit dem Pneumatikzylinder (35) auf die zu verschweissenden Gegenstände (L) ausgeübte Kraft messbar ist.

11. Ultraschallschweissvorrichtung, insbesondere nach einem der Ansprüche 1 bis 10, mit wenigstens einer pneumatischen Antriebsvorrichtung (34, 35, 74) mit einem Pneumatikzylinder zur Bewegung eines Ambosses (3) und/oder eines Oberteils (32) des Ambosses (3) und/oder einer Schutzhaube (7), **dadurch gekennzeichnet, dass** der oder die Pneumatikzylinder (35, 34, 74) mit einer Druckleitung (39, 49, 79) mit einem Druckerzeuger (70) verbunden sind, wobei die Druckleitung (39, 49, 79) derart lang gewählt ist, dass der Druckerzeuger (70) ausserhalb eines Gehäuses (6) der Ultraschallschweissanordnung (1) anordenbar ist.

12. Verfahren zum Ultraschallverbinden von Gegenständen wie elektrischen Leitern (L), insbesondere von Litzen, bestehend aus den Schritten:
- Einlegen der Gegenstände (L) in einen durch ein Seiten teil (31), ein Oberteil (32), einen Seitenschieber (5) und eine Arbeitsfläche (21) einer Sonotrode (2) gebildeten Verdichtungsraum (V)
- Schliessen des Verdichtungsraums (V) und Verdichten der eingelegten Gegenstände (L) durch Bewegen einer Ambossfläche (40) in einer Richtung (R) bezüglich einer Arbeitsfläche (21) der Sonotrode (20)
- Beaufschlagen der Gegenstände (L) mit Ultraschall (U)
- Öffnen des Verdichtungsraums (V) zur Entnahme der verschweissten Gegenstände (L),
wobei der Öffnungsvorgang des Verdichtungsraums (V) aus den Schritten
- Öffnen des Seitenschiebers (5)
- Hochfahren des Ambosses (3) und Bewegen des Oberteils (32) des Ambosses (3) in Richtung des Seitenschiebers (5)
- komplettes Öffnen des Verdichtungsraums (V) und Zurückbewegen des Oberteils (32) des Ambosses (3)
besteht.

13. Verfahren nach Anspruch 12, **dadurch gekennzeichnet, dass** zuerst der Seitenschieber (5) nur leicht geöffnet wird,
dass das Oberteil (32) des Amboss (3) anschliessend am nur leicht geöffneten Seitenschieber (5) zur Anlage gebracht wird,
dass der Amboss (3) hochgefahren wird und dass der Seitenschieber (5) erst dann ganz geöffnet wird, wobei das Oberteil (32) des Ambosses (3) erst zurück bewegt wird, wenn der Amboss (3) in seine Initiallage hochgefahren ist.

14. Verfahren insbesondere nach einem Ansprüche 12 oder 13, wobei ein durch eine Arbeitsfläche (21) einer Sonotrode (2), einen Seitenschieber (5) und einen Amboss (3) mit einem Oberteil (32) und einem Seitenteil (31) begrenzter oder begrenzbarer Verdichtungsraum (V) mit einer pneumatischen Antriebsvorrichtung (34) durch Bewegen wenigstens eines den Verdichtungsraum begrenzenden Elemente (5, 21, 31, 32) verdichtet wird, **dadurch gekennzeichnet, dass** die auf die im Verdichtungsraum (V) angeordneten Gegenstände (L) ausgeübte Kraft durch Messung des Drucks (P) in einem Pneumatikzylinder (35) gemessen wird.

15. Verfahren zum Verbinden von Gegenständen wie elektrischen Leitern, insbesondere von Litzen (L), insbesondere nach einem der Verfahren nach Anspruch 12 bis 14, wobei die Gegenstände (L) in einen durch eine Arbeitsfläche (21) einer Sonotrode (2), einen Seitenschieber (5) und einen Amboss (3) mit einem Seitenteil (31) und einem Oberteil (32) begrenzten Verdichtungsraum (V) eingelegt werden, **dadurch gekennzeichnet, dass** die Position der beweglichen, den Verdichtungsraum begrenzenden Elemente (2, 5, 31, 32) und/oder der Betrag der auf die Gegenstände (L) ausgeübten Kraft laufend ermittelt werden und wobei digitalisierte Messwerte gespeichert werden.

16. Verfahren nach Anspruch 15, **dadurch gekennzeichnet, dass** die Position der beweglichen, deren Verdichtungsraum begrenzenden Elemente, insbesondere eine Vertikalposition des Ambosses (3) und die Position des Seitenschiebers (5) mittels eines digitalen Messgebers (61) ermittelt werden.

17. Verfahren zum Ultraschallverbinden von Gegenständen, insbesondere nach einem der Ansprüche 12 bis 16, mit einem durch eine Arbeitsfläche (21) einer Sonotrode, einen Seitenschieber (5) und einen Amboss (3) mit einem Oberteil (32) und Seitenteil (31) begrenzten oder begrenzbaren Verdichtungsraum,
**dadurch gekennzeichnet, dass** der Verdichtungsraum (V) in einem ersten Verdichtungsschritt (V1) mit einer ersten vorbestimmbaren Kraft verdichtet wird und dass am Ende des ersten Verdichtungsschritts (V1) die Position des Oberteils (32) des Ambosses (3) ermittelt wird,
und dass die im Verdichtungsraum (V) enthaltenen Gegenstände (7) in einem zweiten Verdichtungsschritt (V2) einer weiteren Verdichtung des Verdichtungsraums (V) unterworfen und mit Ultraschall (U) beaufschlagt werden, wenn die Position des Oberteils (32) des Amboss (3) einer vorbestimmbaren Sollposition entspricht.

18. Ultraschweissvorrichtung nach einem der Ansprüche 8 bis 11, **dadurch gekennzeichnet, dass** das Getriebe, insbesondere die Führungskulisse mit einem Messwertgeber, insbesondere einem magnetischen Linearwertgeber zur indirekten Ermittlung der Vertikalposition des Amboss versehen ist.
